# EUROPÄISCHE PATENTANMELDUNG

(11) **EP 3 730 746 A1**
(43) Veröffentlichungstag der Anmeldung: **28.10.2020**
(21) Anmeldenummer: 19171075.5
(22) Anmeldetag: 25.04.2019
(51) Int. Cl.: F01D 17/14, F01D 25/14, F01D 25/24, F16K 49/00, F04D 29/58, F16L 59/18

(54) **ANORDNUNG ZUM ERWÄRMEN EINES BAUTEILS**

(71) Anmelder: Siemens Aktiengesellschaft, 80333 München (DE)
(72) Erfinder: Kostenko, Yevgen, 40878 Ratingen (DE); Zander, Uwe, 45475 Mülheim an der Ruhr (DE)

(57) **Zusammenfassung**

Die Erfindung betrifft eine Anordnung (1) mit einer Überwurfmutter (8) für die Verbindung eines Ventilstutzens (13) an ein Innengehäuse (11) einer Dampfturbine, wobei auf einer Außenseite (6) der Überwurfmutter (8) Mittel zum Beheizen (7), insbesondere eine Heizmatte (16), angebracht sind. Grundgedanke dabei ist einerseits, die Kondensation von Wasser während transienter Betriebsvorgänge zu vermeiden und Differenzen zwischen verschiedenen Bauteiltemperaturen zu vermeiden und so die thermische Belastung zu reduzieren.

## Beschreibung

Die Erfindung betrifft eine Anordnung zur Vermeidung von Wärmespannungen an einem im Betrieb an einer Wandwärmseite erwärmten Bauteils, wobei das Bauteil eine Wanddicke aufweist und auf der gegenüberliegenden Seite zur Wandwärmseite eine Heizseite angeordnet ist.

In Dampfkraftanlagen wird in einem Dampferzeuger unter Zuhilfenahme von fossilen Brennstoffen ein Dampf erzeugt. Dieser Dampf strömt über diverse Leitungen, Ventile und Klappen in eine Dampfturbine. Die Dampfturbine ist in der Regel unterteilt in eine Hochdruck-, Mitteldruck- und Niederdruck-Teilturbine. Die thermische Energie des Dampfes wird in eine Rotationsenergie eines elektrischen Generators umgewandelt. In der Regel werden die Komponenten, wie zum Beispiel die Rohrleitungen, Ventile, Klappen und Dampfturbine, die mit dem heißen Dampf in Berührung kommen, aus einem metallischen Material gefertigt.

Im Betrieb sind in der Regel die metallischen Komponenten derart aufgewärmt, dass eine Kondensation des Dampfes nicht stattfindet. Allerdings sind Betriebsweisen denkbar, wie zum Beispiel beim Anfahren, bei dem die Metalltemperatur noch vergleichsweise niedrig ist. Eine Kondensation könnte hier geschehen, sofern die Metalltemperatur der beaufschlagten Bauteile niedriger ist als die Sättigungstemperatur des Dampfes. Das durch die Kondensation entstandene Wasser könnte Schäden verursachen. So ist es möglich, dass eine einseitige Abkühlung und daraus resultierende Verkrümmung der Komponenten durch Kondensatansammlungen an den Unterteilen von Gehäusen erfolgen kann. Darüber hinaus ist es möglich, dass die Schaufeln in das angesammelte Wasser schlagen können und dadurch beschädigt werden.

Des Weiteren ist problematisch, dass die dickwandigen Bauteile bei der Inbetriebnahme oder auch während des Betriebes beidseitig unterschiedliche thermische Belastungen erfahren. Zwischen verschiedenen Bauteilen können sich Differenztemperaturen ausbilden, die zu thermischen Verzwängungen, unvorteilhafte Verformungen oder Funktionalitätsbeeinträchtigungen führen. Bei dickwandigen Bauteilen kann es zu Thermospannungen oder zu thermischen Ermüdungen führen.

Eine Überwurfmutter als Beispiel eines Bauteils wird zur Ventilanbindung an eine Dampfturbine oberhalb Dampfparameter von 565°C und 250bar eingesetzt. Alternative Anbindungen wie Flanschverbindungen oder geschweißte Verbindungen sind in diesem Bereich schwer oder gar nicht realisierbar. Während des Aufheizens mittels durch die dampftragenden Baugruppen strömenden Dampfes, wie es bei einem transienten Vorgang vorkommt, ist die Überwurfmutter infolge stark unterschiedlicher Temperaturen über deren Wanddicke als auch im Vergleich zu den Baugruppen, welche sie verspannet, stark ausgelastet, was zu bleibenden Verformungen, verringerter Lebensdauer und aufwändiger Demontage führen kann, wenn man die Aufheizgradienten und Aufheiztransienten nicht über Streckung der Anfahrzeit hinreichend begrenzt.

An dieser Stelle setzt die Erfindung an.

Aufgabe der Erfindung ist es, eine Anordnung zur Vermeidung von Wärmespannungen anzugeben.

Gelöst wird dies durch eine Anordnung zur Vermeidung von Wärmespannungen an einem im Betrieb an einer Wandwärmseite erwärmten Bauteils, wobei das Bauteil eine Wanddicke aufweist und auf der gegenüberliegenden Seite zur Wandwärmseite eine Heizseite angeordnet ist, auf der ein Mittel zum Wärmen ausgebildet ist.

Vorteilhafte Weiterbildungen sind in den Unteransprüchen angegeben.

Es wurde erkannt, dass Designverbesserungen und Verfügbarkeitserhöhungen realisiert werden können, wenn ein Mittel zum Wärmen angewendet wird. Durch die gezielte Anwendung des Mittels zum Wärmen im Vorfeld oder parallel zum Start einer Dampfturbine zur Vorwärmung einer Überwurfmutter verringert sich die Auslastung während des nachfolgenden Aufheizvorganges, so dass bleibende Verformungen nicht auftreten und Probleme wie verringerte Lebensdauer und ggf. erforderliche Demontage mit entsprechender Verfügbarkeitsreduktion eines Turbosatzes zur Behebung der Funktionalitätseinbußen entfallen.

Der Effekt, der dabei ausgenutzt wird, ist das Vermeiden eines einseitigen Temperatureintrages in dickwandigen Bauteilen, was ansonsten mit hohen Wärmespannungen infolge verhinderter Wärmedehnung, beispielsweise Verzwängung und entsprechenden thermischen Ermüdungseffekten an der Baugruppe oder plastische Verformung der geklemmten Bauteile einhergehen könnte.

Vorteilhaft ist hierbei, dass durch den reduzierten transienten Temperaturunterschied ein geringerer Lebensdauerverbrauch möglich ist.

Des Weiteren ist eine leichtere Demontage bei der Revision durch reduzierte Restverformung in stark ausgelasteten Bereichen möglich.

Ein weiterer Vorteil ist, dass eine hohe Funktionalität und Flexibilität entsteht.

Ein weiterer Vorteil ist, dass preiswertere Werkstoffe verwendet werden können.

In einer vorteilhaften Weiterbildung wird eine Heizmatte verwendet, die auf der Oberfläche des Bauteils, insbesondere der Überwurfmutter angeordnet wird. Die Heizmatte wird auf dem elektrischen oder induktiven Wirkprinzip betrieben.

Dabei werden die Heizmatten mittels einer Gitterstruktur mit der Oberfläche des Bauteils verschraubt oder geschweißt.

In einer weiteren vorteilhaften Weiterbildung wird vorgewärmte Luft oder ein anderes Medium zum Beheizen verwendet. Dabei wird die Luft oder das Medium durch als Hohlräume oder Ringspalte ausgebildete Hohlräume geleitet.

In einer vorteilhaften Weiterbildung wird in dem erfindungsgemäßen Verfahren die Heizung derart betrieben, dass nach einem Shutdown der Turbomaschine, hier Dampfturbine das Bauteil warmgehalten wird. Die Heizung wird konstant betrieben, um die Dampfturbine, insbesondere das Bauteil warm zu halten. Eine andere Verfahrensart der Heizung ist es, das Bauteil auf eine spezifische Temperatur vorzuheizen, um einen Warmstart zu ermöglichen.

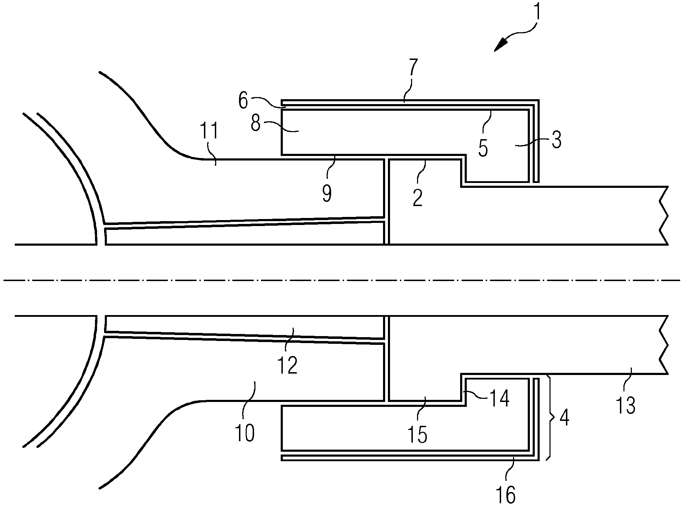

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Zeichnung näher erläutert werden.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigt:
- Figur: eine Querschnittsansicht einer erfindungsgemäßen Anordnung.

Die Figur zeigt eine Anordnung 1 zur Vermeidung von Wärmespannungen an einem im Betrieb an einer Wandwärmseite 2 erwärmten Bauteils 3, wobei das Bauteil eine Wanddicke 4 aufweist und auf der gegenüberliegenden Seite 5 zur Wandwärmseite 2 eine Heizseite 6 angeordnet ist, auf der ein Mittel 7 zum Wärmen ausgebildet ist.

In der in der Figur dargestellten Ausführungsform ist das Bauteil 3 eine Überwurfmutter 8.

Ein anderes Beispiel für ein Bauteil 3 wäre ein Gehäuse, wie zum Beispiel ein Innengehäuse oder ein Außengehäuse einer Dampfturbine (nicht dargestellt).

Die Überwurfmutter 8 ist mittels eines Gewindes 9 mit einem Einströmstutzen 10 eines Gehäuses, insbesondere Innengehäuse 11 verbunden.

Innerhalb des Innengehäuses 11 ist ein Rotor (nicht dargestellt) drehbar gelagert.

Der Einströmstutzen 10 ist zum Zuführen von Dampf ausgebildet und umfasst einen Ventilkeil 12. Innerhalb des Ventilkeils 12 strömt der Dampf in die Dampfturbine. Der Einströmstutzen 10 wird mit einem Ventilstutzen 13 mit der Überwurfmutter 8 verbunden. Über einen Anschlag 14 an der Überwurfmutter 8 wird diese gegen einen Vorsprung 15 an dem Einströmstutzen 10 gedrückt.

Im Betrieb erwärmt sich die Wandwarmseite 2. Allerdings ist auf der gegenüberliegenden Seite 5 die Temperatur der Heizseite 6 geringer, was durch das Mittel 7 geändert wird. Das Mittel 7 ist zum Wärmen ausgebildet und ist in einer ersten Ausführungsform als Heizmatte 16 ausgebildet.

Die Heizmatte 16 wird gemäß dem Wirkprinzip des elektrischen oder induktiven Widerstandes betrieben.

Eine andere Ausführungsform des Mittels 7 ist durch Leitungen (nicht dargestellt) gegeben, die innerhalb des Bauteils 3 angeordnet sind. Die Leitungen, die Hohlräume bzw. Ringspalte darstellen können, sind dabei in der Nähe der Oberfläche der Heizseite 6 angeordnet.

Durch die Leitungen strömt ein warmer Dampf oder eine warme Luft, der oder die das Bauteil 3 lokal erwärmt.

Das Bauteil 3 ist in einem weiteren Ausführungsbeispiel als Gehäuse, insbesondere Innengehäuse oder/und Außengehäuse einer Dampfturbine ausgebildet.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Anordnung zur Vermeidung von Wärmespannungen an einem im Betrieb an einer Wandwärmseite erwärmten Bauteils, wobei das Bauteil eine Wanddicke aufweist und auf der gegenüberliegenden Seite zur Wandwärmseite eine Heizseite angeordnet ist, auf der ein Mittel zum Wärmen ausgebildet ist.

2. Anordnung nach Anspruch 1,
wobei das Mittel zum Wärmen als Heizmatte ausgebildet ist, die auf die Heizseite angeordnet wird.

3. Anordnung nach Anspruch 2,
wobei die Heizmatte auf dem Wirkprinzip des elektrischen oder induktiven Widerstandes basiert.

4. Anordnung nach Anspruch 1,
wobei das Mittel zum Wärmen durch Leitungen innerhalb des Bauteils an der Heizseite gebildet ist, wobei im Betrieb ein Heizmedium, insbesondere vorgewärmte Luft durch die Leitungen strömt.

5. Anordnung nach einem der vorhergehenden Ansprüche,
wobei das Bauteil ein Gehäuse einer Strömungsmaschine, insbesondere einer Dampfturbine ist.

6. Anordnung nach Anspruch 5,
wobei das Gehäuse ein Innengehäuse oder ein Außengehäuse einer Dampfturbine ist.

7. Anordnung nach einem der Ansprüche 1 bis 4,
wobei das Bauteil eine Überwurfmutter ist, die zum Anbringen eines Ventilstutzen an einen Einströmstutzen eines Gehäuses einer Dampfturbine ausgebildet ist.

8. Anordnung nach einem der vorhergehenden Ansprüche, wobei das Mittel auf der kompletten Heizseite angeordnet ist.

9. Verfahren zur Reduzierung von Wärmespannungen an einem Bauteil, wobei das Bauteil eine Wanddicke aufweist und auf der einen Seite eine Wandwärmseite aufweist, die im Betrieb erwärmt wird, wobei zur Wandwärmseite gegenüberliegend eine Heizseite angeordnet ist, die durch ein Mittel zum Wärmen aufgewärmt wird.

10. Verfahren nach Anspruch 9,
wobei das Mittel als Heizmatte ausgebildet wird, das um das Bauteil angeordnet wird.

11. Verfahren nach Anspruch 9 oder 10,
wobei das Bauteil mit Leitungen an der Heizseite ausgebildet wird und durch diese Leitungen ein Heizmedium strömt, das zur Erwärmung der Heizseite des Bauteils führt.

12. Verfahren nach Anspruch 9, 10 oder 11,
wobei das Bauteil als Überwurfmutter zum Verbinden eines Ventilstutzen mit einem Einströmstutzen einer Dampfturbine ausgebildet wird.

13. Verfahren nach Anspruch 9, 10 oder 11,
wobei das Bauteil als Gehäuse, insbesondere Innengehäuse oder Außengehäuse einer Dampfturbine ausgebildet wird.
